(19) Europäisches Patentamt
European Patent Office
Office européen des brevets

(11) Publication number : **0 471 780 B1**

(12) **EUROPEAN PATENT SPECIFICATION**

(45) Date of publication of patent specification : **29.12.93 Bulletin 93/52**

(51) Int. Cl.$^5$ : **G03C 1/85,** C09K 3/16, C01G 19/02

(21) Application number : **90908355.2**

(22) Date of filing : **09.05.90**

(86) International application number : **PCT/US90/02570**

(87) International publication number : **WO 90/13851 15.11.90 Gazette 90/26**

(54) **Photographic and cinematographic film comprising an antistatic layer.**

(30) Priority : **09.05.89 US 349458**

(43) Date of publication of application : **26.02.92 Bulletin 92/09**

(45) Publication of the grant of the patent : **29.12.93 Bulletin 93/52**

(84) Designated Contracting States : **BE CH DE FR GB IT LI NL**

(56) References cited :
**GB-A- 2 094 013**
**US-A- 3 676 362**
**Chemical Abstracts, vol. 93, no. 8, 25 August 1980, Columbus, Ohio, US, ref. no. 86907F & JP-A-8035428**
**Patent Abstracts of Japan, vol. 13, no. 339 (C-624)(3687) 31 July 1989, & JP-A-1- 116082**
**Patent Abstracts of Japan, vol. 12, no. 172 (C-497)(3019) 21 May 1988, & JP-A-62 280286**
**Patent Abstracts of Japan, vol. 13, no. 112 (P-844)(3460) 17 March 1989, & JP-A-63 287849**

(73) Proprietor : **EASTMAN KODAK COMPANY**
**343 State Street**
**Rochester, New York 14650-2201 (US)**

(72) Inventor : **MELPOLDER, Sharon, Marilyn**
**420 North Avenue**
**Hilton, NY 14468 (US)**
Inventor : **COLTRAIN, Bradley, Keith**
**95 South Ridge Trail**
**Fairport, NY 14450 (US)**
Inventor : **GARDNER, Sylvia, Alice**
**50 Smugglers Lane**
**Rochester, NY 14617 (US)**

(74) Representative : **Brandes, Jürgen, Dr. rer. nat. et al**
**Wuesthoff & Wuesthoff Patent- und Rechtsanwälte Schweigerstrasse 2**
**D-81541 München (DE)**

EP 0 471 780 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### Technical Field

This invention relates to a material comprising an antistatic layer on a film selected from photographic film and cinematographic film.

### Background Art

Tin oxide coatings have been applied to glass to make it more antistatic. For example, such coatings have been applied to the surface of cathode ray tubes and similar devices, where the buildup of static charges is undesirable. Antistatic coatings combat the accumulation of dust on surfaces where dust impairs the function of the article.

Antistatic coatings are useful in other arts as well. For example, it is well known that numerous types of photographic film supports have the tendency to produce charges of static electricity during winding and unwinding, and that these charges do not easily dissipate, because the materials that are used as film supports usually are poor electrical conductors. High potentials that have been created in this manner, may discharge suddenly in the course of manufacture or in the course of utilization of the product by the user, causing flashes of light from static electricity and an undesirable recording of the static electricity discharge on a radiation-sensitive layer, such as a layer of photographic emulsion. In order to avoid this result, it is customary in the prior art to apply to the backing of the film support an electrically conductive layer, also referred to as an antistatic layer, to facilitate the dissipation of the static charges, and thus avoid the sudden discharges and the resulting light flashes which otherwise would damage the radiation-sensitive layer. The antistatic coating need not be applied to the backing of the film support, as stated above. Alternatively, it may be applied in a subbing layer or in a conductive overcoat (COC).

Known antistatic layers generally consist of a binder in which is dispersed an organic or inorganic conductive substance to render the surface on which the layer is coated, for example, a film support, sufficiently conductive to make possible the flow of the electrostatic charges to a discharge means. Most often, antistatic layers are more or less hygroscopic layers, the efficiencies of which vary as a function of the degree of humidity in the air. Some layers may not be very suitable for use under conditions of low relative humidity because they are no longer sufficiently conductive. Likewise, some hygroscopic layers are not very suitable at conditions of high humidity because they become sticky. It is difficult to separate them from the surfaces to which they adhere. The effort that is necessary to separate two superimposed layers, for example, sometimes creates charges higher than those that would appear in the absence of any antistatic layer.

Specific references to antistatic materials, and to the use of the tin oxide to provide conductive films, are cited below.

U. S. 4,203,769 to Claude Guestaux, and assigned to Eastman Kodak Company, describes a vanadium pentoxide composition for use with photographic film or paper, and other radiation sensitive articles. The most preferred composition contains 100% $V_2O_5$. In that invention, it was found that as soon as the amount by weight of amorphous $V_2O_5$ in the antistatic material reaches and surpasses about 90%, a colloidal solution of $V_2O_5$ obtained with an unusually high content of $V_2O_5$, so that it is possible to obtain high antistatic properties, e.g. high conductivity, with a lower deposited quantity of the antistatic material than is needed when a lesser amount of amorphous $V_2O_5$ is present.

U. S. 3,676,362 describes the preparation of $Sb_2O_3$, $SnO_2$, $TiO_2$ and $ZrO_2$ by a sol-gel technique. The inorganic oxides are incorporated into polymers to provide flame resistance and other desirable properties.

U. S. 4,452,830 describes an electro- conductive composition comprising a dispersion of titanium oxide particles having a coating layer of antimony-containing tin oxide.

U. S. 4,594,182 describes indium-containing tin oxide compositions for forming a transparent conductive film.

U. S. 2,772,190 teaches that the electrical conductivity of tin oxide films is enhanced with antimony and by phosphorous compounds

Japanese Kokoku No. Sho 45 (1970) - 5915 pertains to treatment of synthetic resins to make them antistatic. The compounds used are selected from stannous alkoxides and stannous acylates. These compounds hydrolyze under the influence of oxygen to tetravalent tin moieties which form polymers:

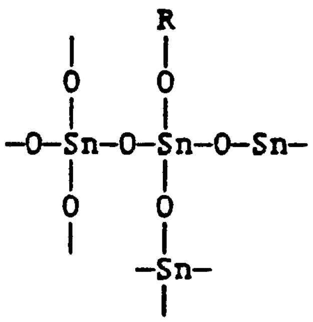

(I)

Gonzales-Oliver et al, J. of Non-Crystalline Solids 82(1986) 400-410 describes electroconductive antimony doped tin oxide coatings prepared by dip-coating and spray-coating techniques.

Japanese Kokai 56-82504 discloses use of colloidal tin oxide in the preparation of electrically conductive transparent film. The colloidal oxide is coated on the substrate and processed by using a gas plasma which contains oxygen. The tin oxide colloid can be doped with a Group III B element, for example, aluminum, gallium, indium, tellurium, or an element in Group VB, for example, arsenic, antimony or bismuth.

Japanese Kokai 55/35428 (1980, 035428) describes a transparent electrical conducting film prepared on a glass plate by dipping the plate in a solution of $B(OCH_3)_4$ and $Sn(OCH_3)_4$ in aqueous acetic acid and methanol), drying the coated plate at 150°C. and then firing for two hours at 500°C.

## Disclosure of Invention

This invention provides a material comprising an antistatic layer on a film selected from photographic film and cinematographic film; said layer comprising a sol-gel process-derived heteropolycondensate having a tin oxide and boron oxide in a three dimensional metal oxide network, in which tin oxide and boron oxide moieties are bonded together by bridging oxygens, and the boron oxide content is from one to thirty mole percent, said heteropolycondensate being further characterized by being prepared by a process comprising subjecting a mixture of a hydrolyzable tin compound and a hydrolyzable boron compound, wherein the boron compound is in an amount of from one to thirty mole percent, to hydrolysis/condensation in an organic solvent using a stoichiometric or substantially stoichiometric amount of water, thereby forming a solution of said heteropolycondensate; and subsequently applying said solution of said condensate to said film, and removing the solvent at a temperature of from 50°C to 150°C to form said antistatic coating of said hetero-polycondensate on said film, said antistatic layer conferring a sheet restivity in ohms per square at 49% relative humidity of $10^9$ when formed at said temperature.

In an important aspect, the heteropolycondensates are used to prepare antistatic coatings that are transparent. Such coatings or layers are used to coat photographic film and cinematographic film to give them a conductive surface. Such coated surfaces are less susceptible to the accumulation of undesired dust particles, which detract from the usefulness or aesthetic characteristics of the article. The surface is also less susceptible to the build-up of unwanted electrostatic charges.

The coating process is inexpensive, and readily carried out without the need for costly machinery. Furthermore, it has been found that it is not necessary to cure the coating at elevated temperatures greater than 150°C to reduce electrical resistivity. Thus, the antistatic coatings, films, and layers can be produced by a low temperature technique. This finding, and the degree of antistatic property conferred by the coating, were entirely unexpected.

This invention provides antistatic layers which are substantially non-hygroscopic in nature. Compared to prior art materials, the antistatic materials of this invention are less susceptible to humidity caused variations in antistatic activity. Moreover, as indicated above, the antistatic layers of this invention are readily applied to films as mentioned by application of known techniques. In view of the above-discussed advantages provided by this invention, it is considered to be a significant advance in the art.

## Best Mode for Carrying Out the Invention

The compositions used for preparing the antistatic layer may contain residual hydrolyzable and/or not fully condensed species.

In antistatic layers of materials of this invention, the boron oxide composition is from one to thirty mole percent, more preferably from two to twenty mole percent.

As stated above, the heteropolycondensates from layers which are optically clear, i.e. transparent. It is believed that the optical clarity is due to the homogeneity of the compositions. In other words, from the transparency of the compositions it is believed that they are substantially free of heterogeneous particles and immiscible domains which are of a size sufficient to scatter visible light. Thus, this invention provides an antistatic layer comprising a tin oxide and boron oxide heteropolycondensate wherein the boron oxide content enhances the electrical conductivity of said layer.

Layers of this invention are produced by a sol-gel process. By this method, the boron oxide moieties and the tin oxide moieties in the compositions can be bonded together in a network. Thus, this invention provides non-colloidal particles in which the boron oxide is not merely concentrated on the surface of discrete tin oxide particles. In other words, the layers of this invention comprise boron and tin species linked by bridging oxygens. Some of the novel materials are believed to be non-fully condensed oxides, since they are produced by a low temperature process.

In a highly preferred embodiment, this invention comprises a low temperature process for forming a non-colloid derived antistatic layer on a film selected from photographic film and cinematographic film, said process comprising (i) forming a tin oxide sol-gel containing from one to thirty mole percent boron oxide, by subjecting a mixture of a hydrolyzable tin compound and a hydrolyzable boron oxide compound in an organic solvent to hydrolysis/condensation using a substantially stoichiometric amount of water, thereby forming a hetero-polycondensate network of boron oxide and tin oxide species wherein the boron oxide is covalently bound in said network and (ii) subsequently applying the solution of said heteropolycondensate thereby produced to a substrate and then removing said solvent at a temperature between 50°C and 150°C to form an antistatic layer on said films.

As stated above, the compositions for preparing the antistatic layers are made from tin and boron compounds which yield tin oxide and boron oxide moieties (which may include not fully condensed or hydrolyzed species of either element, as mentioned above) when reacted under the process conditions employed. Thus, the compositions are prepared from reaction mixtures that comprise a hydrolyzable tin compound. For this invention, tin tetrahalides, e.g. compounds having the formula $SnX_4$ wherein X is a halogen, may be used. A preferred tetrahalide is tin tetrachloride.

One may also use stannic alkoxides and stannic acylates to prepare the heteropolycondensates of this invention. These materials have the formulas:

$$Sn(OR)_4 \qquad\qquad Sn(O\overset{\overset{\displaystyle O}{\|}}{C}R)_4$$

(II) (III)

As shown by the example, good results are obtained when a tetravalent tin compound is employed. These results suggest, in light of the teachings of Japanese Kokoku No. 45-5915, supra, that stannous alkoxides and acylates may also be useful in this invention. If employed, these compounds may be reacted in the presence of oxygen, air, or oxygen enriched air so that tin in a tetravalent state is produced.

It is preferred that these starting materials contain lower acyl and lower alkoxy groups, i.e. acyl and alkoxy groups which have up to six carbon atoms. Thus, the groups represented by R in formulas (II) and (III) are organic groups, preferably groups solely composed of carbon and hydrogen, and most preferably alkyl radicals of from one to six carbon atoms, and such alkyl radicals substituted with ether linkages. With regard to the latter type of compound a preferred example is a radical having the formula $-OCH_2CH_2-OCH_2CH_2OCH_3$. This type of radical may be derived by reacting stannic halide in the presence of methoxyethoxyethanol.

Higher acyl and alkoxy groups can be present in the starting materials used in this invention. For example, one may select a group having more than six carbons in order to have a reactant which is more soluble in an organic solvent of choice, or because a slower hydrolysis rate is desired.

Other hydrolyzable tin compounds can be used to prepare the antistatic compositions.

Thus, one may use any tin compounds which will hydrolyze within a reasonable time, i.e. at about the same rate as the tin compounds mentioned above, when contacted with water at a temperature of from -20°C to 130°C. A skilled practi- tioner can readily elucidate whether a compound is suitable for this invention by simple experimenta- tion, conducted to determine the rate of hydrolysis.

With further reference to the starting tin compounds, the tin tetrahalides form corrosive by-products upon hydrolysis or alcoholysis. The by-products from tin alkoxides are not so corrosive. However, the alkoxides may not be as readily available, or may cost more than tin tetrachloride, for example. Moreover, the alkoxides can be readily formed from the tetrahalide by addition of the appropriate alcohol. Furthermore, the alkoxides may not hydrolyze as readily as the halides. Moreover, tin alkoxides with smaller alkoxy groups generally hydrolyze faster than those with larger alkoxy groups. A practitioner may wish to consider these comparative points when selecting the tin compound (or compounds) for use in this invention.

As taught above, the compositions are prepared in part from a boron compound that can form a boron oxide by hydrolysis and condensation. Typical boron compounds that can be used as starting materials in this invention are the borates. Preferably, these are derivatives of lower alcohols. In other words, it is preferred that the boron compounds be selected from borates having the formula:

$$B(OR)_3$$

wherein OR is a lower alkoxy group as discussed above. It is to be understood however, that although it is preferred that the groups represented by R contain up to six carbon atoms, that borates with larger groups can also be used in this invention. Other types of boron compounds suitable for use in this invention can be readily ascertained by a skilled practitioner using a simple experiment to determine the hydrolysis rate. If such compounds hydrolyze about as fast as the borates they may be used in this invention.

The mixed oxide heteropolycondensates of this invention can be prepared from a mixture of one or more tin and one or more boron compounds of the types discussed above. The relative amounts are selected so that the boron content of the product increases the electroconductivity of the product. As stated above, the amount of boron oxide (calculated as $B_2O_3$) is generally in the range of from one to thirty mole percent.

As already indicated, the heteropolycondensates of this invention are made by a sol-gel process. Generally speaking,the tin and boron compounds are initially co-mixed, i.e. co-polymerized in the substantial absence of water, and in the presence of one or more organic solvents in which the process is to be carried out. Alternatively the condensates of this invention can be made by a two-step reaction. More specifically, the boron source and the tin source can be initially reacted separately to prepare low molecular weight oligomers, which are subsequently mixed and co-reacted to form a type of block copolymer. One may also blend two prepolymers to prepare a blend rather than a copolymerized system.

Solvents which can be used preferably dissolve or are miscible with the tin and boron compounds, and are miscible with the amount of water used in the hydrolysis. Solvents of this type include tetrahydrofuran, acetone, methoxyethoxyethanol, methoxyethanol, ethylene glycol, methyl cellosolve, mixtures thereof, and the like. Applicable solvents include alcohols that correspond to the alkoxy groups in the tin and/or boron compounds employed. Thus, the applicable solvents include alcohols which have from one to six carbon atoms, e.g. methanol, ethanol, n-hexanol, and the like.

Solvent quantities of the solvent are employed. One uses enough solvent to dissolve the metal compounds used to produce the binary metal oxides in the heteropolycondensate. It is within the skill of a practitioner having ordinary skill in the art to determine the amount of solvent to employ. As shown by the Example which follows, the amount of solvent may be from 2 to 6 times the volume of a liquid reactant. Greater or lesser amounts of solvent can be used. When a solid reactant is employed as a starting material, an analogous amount of solvent can be used. The amount of solvent employed will depend to some extent on the thickness of the product coating desired, and the viscosity of the polymer being coated on the substrate.

As shown by the Example, good results are obtained when methoxyethoxy ethanol is employed as a reaction medium. Accordingly this substance and others which have the same properties are highly preferred as reaction solvents.

To conduct the sol-gel process, the compounds to be reacted are admixed with water under reaction conditions. For this purpose, the amount of water is about the amount required to hydrolyze the hydrolyzable groups in the tin and boron compounds used as starting materials. Thus for example, if a tin tetrahalide is used, four moles of water are required for each mole of tin tetrahalide. For each mole of trialkoxy borate employed, three moles of water are required.

The amounts of water discussed above are the stoichiometric amounts, i.e. the amounts of water required by the balanced chemical equations depicting the process. It is not required that an exact stoichiometric amount be employed. Thus, for the process of this invention a "substantially stoichiometric amount" of water can be used. As used herein a "substantially stoichiometric amount" is the stoichiometric amount plus or minus the amount of water within ordinary processing error. Therefore, under most circumstances, a substantially stoichiometric amount of water is the stoichiometric amount plus or minus 10 mole percent.

When calculating the stoichiometric amount, the amount of water formed by condensation reactions in the sol-gel process is ignored.

The sol-gel process comprises condensation reactions as well as hydrolysis reactions. This combination

of reactions is depicted for tin in the above-cited Japanese Kokoku 45-5915 as follows:

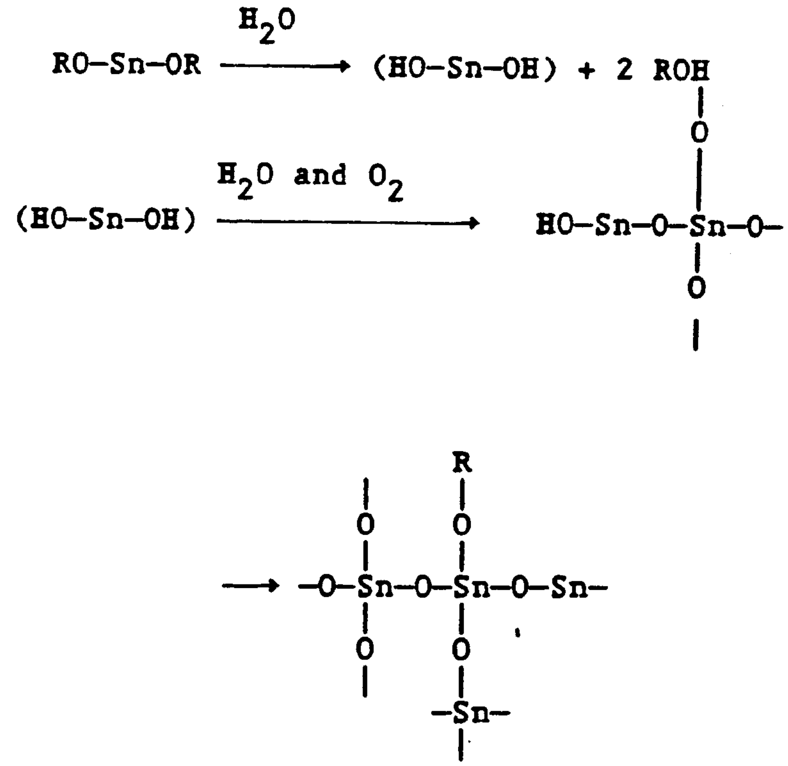


An analogous hydrolysis/condensation process takes place with the boron compounds employed as starting materials in this invention. In this way, the boron and tin species (which contain -OH groups) interact by condensation to form a mixed heteropolycondensate which contains both tin oxide and boron oxide moieties. It will be recognized by a skilled practioner that each boron atom will be linked in the substrate by three bridging oxygens, -O-. For some products it is believed that the boron oxide moieties are randomly dispersed among the tin oxide groups; however all that is necessary is that the boron-containing moieties confer an increase in electroconductivity.

The hydrolysis/condensation process is conducted at any convenient temperature which gives the desired results. Generally, the process is conducted at a temperature between -20°C and 130°C. More preferably, the process is conducted at a temperature between 0°C and 70°C. Reaction temperatures at or ambient temperature are highly preferred.

The process is generally conducted in at one temperature until hydrolysis and condensation is essentially complete. If desired, more than one temperature can be used. The temperature selected will be determined at least to some extent by the reactivity of the reactants employed, and the relative amounts of tin and boron reactants used.

The process can be conducted at any convenient pressure. Atmospheric pressure is preferred; however one may employ a sub-atmospheric pressure, if desired, to assist driving off solvent and other volatiles present. Also, a super atmospheric pressure may be employed; however such pressures ordinarily do not offer any material advantage.

The process time is not a truly independent variable, but is dependent to an appreciable extent on the other reaction variables employed, such as the reaction temperature, and the inherent reactivity of the starting materials. In general, the process can be conducted in 0.25 to 24 hours.

Above, it was stated that the process can be conducted in one stage until condensation is complete. However, it is not necessary that the process be conducted in this manner. For example, the process may be carried out in two stages; first, a precondensation of one or more reactants until a desired amount of condensation occurs, followed by a completion of the condensation after admixing the reactants. As stated above, the process can be conducted by blending two polymers. In these embodiments where separate process steps are used, the separate steps can be conducted using the same or different reaction conditions.

The process may be conducted at more than one reaction temperature. For example much of the hydrolysis/condensation can be conducted at ambient temperature, or thereabouts, followed by a finishing step conducted at a temperature that is somewhat higher, such as temperature within the range of from 50°C to 150°C.

Hence, the antistatic layers of this invention can be produced by a low temperature technique.

The coating processes that are used to apply the antistatic composition of this invention to the films may be roll coating processes which comprise using a wetting cylinder or roll, partly immersed in the solution to be applied, and a cylinder or roll around which moves the film support to be processed, creating between them a solution meniscus that the film support impinges against, resulting in a coating on at least one surface. However, one may use any of the conventional coating processes, such as hopper coating, with removal of the excess quantity by means of an "air knife", brush coating, and other techniques used in the coating arts.

The quantity of antistatic composition which can be applied to the supports may vary considerably. The coverage may vary from 0.1 mg/m$^2$ to 300 mg/m$^2$, but it can be higher, for example up to 6 g/m$^2$, if necessary. In photographic products, the antistatic composition is applied preferably at from 1 to 200 mg/m$^2$.

The antistatic layer may occupy various positions in the products to be treated, for example, it can be a backing layer, or a sublayer. In photographic products, the antistatic layer is generally a backing layer, subbing layer or COC.

In order to improve the mechanical properties of the layers, and particularly the friction coefficient, it is contemplated that one may provide a layer containing a compound that imparts the desired property, e.g., a lubricant such as carnauba wax. One may also apply a protective layer containing a cellulose derivative, e.g., cellulose acetobutyrate.

It is possible to apply to the antistatic layer to the two previously mentioned layers, or else a single layer containing both the binder and the lubricant. The antistatic layer retains, however, its conductive properties.

The antistatic layers obtained from the composition according to the invention may have a permanent or temporary character, depending on the use that is intended for the treated products. An advantage of the antistatic composition made according to this invention is that antistatic layers prepared from them, and which are made to be a permanent part of a coating on a support, such as in a radiation-sensitive, e.g., photographic product, remain conductive even after development and processing of the product through processing solutions and equipment.

Above it was stated that this invention provided a process in which an antistatic coating could be produced at a low temperature. This provides important advantages in coating materials such as photographic film. It is to be understood however, that the compositions of this invention can also be produced at conventional higher temperatures, if desired. Further discussion of the temperatures used in this invention is set forth after the Example which follows.

Example

(A) Tin tetrachloride (20 ml, 0.17 mole) and 50 ml of methoxyethoxyethanol were stirred for 30 minutes at ambient temperature. Thereafter 12.3 ml of water (0.68) mole was added slowly and mixed at ambient temperature for 30 minutes and the resultant mass heated for two hours at 60°C, using a constant temperature bath. The result is a highly viscous sol-gel solution of tin oxide, i.e. a tin oxide heteropolycondensate.

(B) Tin tetrachloride (20 ml, 0.17 mole) and 100 ml of methoxyethoxyethanol were stirred at ambient temperature for 30 minutes. To the stirred mixture was added 0.5 ml (0.0044 mole) of trimethyl borate; the resultant mixture was stirred for an additional 15 minutes at room temperature. Thereafter, 12.5 ml of $H_2O$ (1 mole of water per mole of hydrolyzable group) in 25 ml of methoxyethoxyethanol was added very slowly, and the reaction mixture stirred for an additional 10 minutes at ambient temperature. The product was a mixed tin oxide, boron oxide heteropolycondensate.

(C) Samples of the products of (A) and (B) were knife coated on subbed Estar film on a 43°C heated block using a 0.5 mil Bird blade. The films were heated in an oven at 75°C for 15 minutes. The resulting sheets were transparent. The resistivity of the sheets was measured using standard techniques by balancing areas of the sheet between test electrodes against standard resistances.

Results were as follows:

**Resistivity Measurements**

| Sample | Sheet Resistivities Ohms per square @ 49% relative humidity |
|---|---|
| tin oxide sol-gel (A) | $10^{13}$ |
| tin oxide-boron oxide sol-gel (B) | $10^{9}$ |

As shown, the electroconductivity of the product of this invention (B) was markedly superior to the comparative material.

As pointed out in above-cited Japanese Kokai 56-82504, there are problems associated with the preparation of prior art antistatic layers. For example, some methods are based on vacuum deposition, or on sputtering techniques. Some prior art methods require heating the film in the presence of air to a temperature in the range of 400-600°C or higher. Such techniques are generally inappropriate for use with substrates such as plastic, which are degraded by such temperatures.

In contrast with the prior art methods discussed above, this invention does not require expensive equipment for vacuum deposition or sputtering, and it does not require high temperatures.

With regard to temperature, the following further elucidates the unexpected results obtained with this invention. As stated in the Example, an undoped tin oxide sol-gel film prepared by heating in air at 75°C had a sheet resistivity in ohms per square of $10^{13}$. Upon heating in air at 500°C, the sheet resistivity was reduced to $10^{11}$. In contrast, the film of this invention produced by the procedure of the above example had a much better resistivity, $10^{9}$, even when no highly elevated temperature was employed, as with the pure tin oxide layer. Processing at elevated temperatures i.e. 450-500°C in air, oxygen or inert gas (e.g. argon) atmosphere will further improve the conductivity of the product of this invention. For example heating in oxygen for one hour at 450°C reduced the resistivity to $10^{5}$ ohms per square. The undoped tin heated in argon at 450°C for one hour had a resultant resistivity of $10^{4}$ ohms per square.

Other products of this invention are made from mixtures of a tin tetrahalide or a tin acylate or alkoxide of the types described and illustrated above, and a borate of the type defined and illustrated above. The mixtures are formulated such that the boron oxide content of the products are from one to 30 mole percent. The mixtures are hydrolyzed and condensed using a substantially stoichiometric quantity of water, and in the presence of an organic solvent of the types set forth above. The hydrolysis/condensation is conducted in the presence of air or oxygen, using a reaction temperature of from -20°C to 130°C for from 15 minutes to 24 hours; such that the shorter times are used with the higher reaction temperatures.

Layers of the resultant mixed tin oxide, boron oxide heteropolycondensates are prepared as described above. They can also be prepared by spray coating, spin coating, and dip coating as described in Gonzales-Oliver supra, and by similar techniques.

The concentration of the tin oxide boron oxide heteropolycondensate in the solution used for coating can vary within wide limits. Generally speaking, it will be from 0,50 to 50 weight percent. Greater or lesser concentrations can be employed if desired.

This invention has been described in detail in particular reference to preferred embodiments. A skilled practitioner familiar with the above detailed description can make any modifications or changes without departing from the scope of the appended claims.

## Claims

1. A material comprising an antistatic layer on a film selected from photographic film and cinematographic film; said layer comprising a sol-gel process-derived heteropolycondensate having a tin oxide and boron oxide in a three dimensional metal oxide network, in which tin oxide and boron oxide moieties are bonded together by bridging oxygens, and the boron oxide content is from one to thirty mole percent, said heteropolycondensate being further characterized by being prepared by a process comprising subjecting a mixture of a hydrolyzable tin compound and a hydrolyzable boron compound, wherein the boron compound is in an amount of from one to thirty mole percent, to hydrolysis/condensation in an organic solvent using a stoichiometric or substantially stoichiometric amount of water, thereby forming a solution of said heteropolycondensate; and subsequently applying said solution of said condensate to said film, and removing the solvent at a temperature of from 50°C to 150°C to form said antistatic coating of said heteropolycondensate on said film, said antistatic layer conferring a sheet restivity in ohms per square at 49% relative humidity of $10^9$ when formed at said temperature.

2. A material as described in Claim 1 wherein the coverage of said antistatic layer is from 0.1 mg/m$^2$ to 300 mg/m$^2$.

3. A material as described in Claim 1 wherein the coverage of said antistatic layer is from 1 to 200 mg/m$^2$.

## Patentansprüche

1. Material mit einer antistatischen Schicht auf einem Film, ausgewählt aus photographischem Film und cinematographischem Film; wobei die Schicht ein sich von einem Sol-Gel-Verfahren stammendes Heteropolykondonsat mit einem Zinnoxid und Boroxid in einem dreidimensionalen Metalloxidnetzwerk aufweist, in dem die Zinnoxid- und Boroxidreste über brückenbildende Sauerstoffatome miteinander verbunden sind, und wobei der Boroxidgehalt bei 1 bis 30 Mol-% liegt und wobei das Heteropolykondensat ferner dadurch gekennzeichnet ist, daß es nach einem Verfahren hergestellt wird, bei dem eine Mischung aus einer hydrolisierbaren Zinnverbindung und einer hydrolisierbaren Borverbindung, in der die Borverbindung in einer Menge von 1 bis 30 Mol-% vorliegt, einer Hydrolyse/Kondensation in einem organischen Lösungsmittel unterworfen wird, unter Verwendung einer stöchiometrischen oder praktisch stöchiometrischen Menge von Wasser, unter Bildung einer Lösung des Heteropolykondensates; und nachfolgendem Aufbringen der Lösung des Kondensates auf den Film und Entfernung des Lösungsmittels bei einer Temperatur von 50°C bis 150°C, unter Bildung der antistatischen Schicht des Heteropolykondensates auf dem Film, wobei die antistatische Schicht zu einem Blatt-Widerstand in Ohm pro Quadrat bei 49prozentiger relativer Feuchtigkeit von $10^9$ führt, wenn sie bei dieser Temperatur erzeugt wird.

2. Material nach Anspruch 1, bei dem die Beschichtungsstärke der antistatischen Schicht bei 0,1 mg/m$^2$ bis 300 mg/m$^2$ liegt.

3. Material nach Anspruch 1, bei dem die Beschichtungsstärke der antistatischen Schicht bei 1 bis 200 mg/m$^2$ liegt.

## Revendications

1. Elément comprenant une couche antistatique sur un film choisi parmi les films photographiques et les films cinématographiques, ladite couche comprenant un hétéropolycondensat dérivé d'un processus sol-gel ayant un oxyde d'étain et un oxyde de bore dans un réseau d'oxyde métallique tridimensionnel, dans lequel les groupes d'oxyde d'étain et d'oxyde de bore sont liés l'un à l'autre par pontage d'atomes d'oxygène, et la teneur en oxyde de bore est de 1 à 30 moles %, ledit hétéropolycondensat étant par ailleurs caractérisé en ce qu'il est préparé par un procédé consistant à soumettre un mélange d'un composé d'étain hydrolysable et d'un composé de bore hydrolysable, dans lequel le composé de bore est présent à raison de 1 à 30 moles %, à une opération d'hydrolyse/condensation dans un solvant organique en utilisant une quantité stoéchiométrique ou sensiblement stoéchiométrique d'eau, à former de la sorte une solution dudit hétéropolycondensat, à appliquer ensuite ladite solution dudit condensat audit film et à éliminer le solvant à une température de 50 à 150°C pour former ledit revêtement antistatique dudit hétéropolycondensat sur ledit film, ladite couche antistatique conférant à la feuille une résistivité en ohms par carré à 49 % d'humidité relative de $10^9$ lorsqu'elle est formée à ladite température.

2. Elément selon la revendication 1 dans lequel la couverture de ladite couche antistatique est de 0,1 mg/m$^2$ à 300 mg/m$^2$.

3. Elément selon la revendication 1 dans lequel la couverture de ladite couche antistatique est de 1 à 200 mg/m$^2$ .